# EUROPÄISCHE PATENTSCHRIFT

(11) **EP 3 055 083 B1**
(45) Veröffentlichungstag und Bekanntmachung des Hinweises auf die Patenterteilung: **14.11.2018**
(21) Anmeldenummer: 14777357.6
(22) Anmeldetag: 30.09.2014
(51) Int. Cl.: B21B 35/14, F16D 1/06

(54) **ZAPFENAUFNAHME FÜR EINE NABE INSBESONDERE IN EINEM WALZWERK**
PIN RECEIVING PORTION FOR A HUB, IN PARTICULAR IN A ROLLING MILL
LOGEMENT DE TOURILLON POUR MOYEU, EN PARTICULIER DANS UN LAMINOIR

(30) Priorität: 07.10.2013 DE 102013220216
(43) Veröffentlichungstag der Anmeldung: 17.08.2016
(73) Patentinhaber: Voith Patent GmbH, 89522 Heidenheim (DE)
(72) Erfinder: STOCKER, Jürgen, 73466 Gromberg (DE); GRAWENHOF, Peter, 89547 Dettingen (DE); MAIER, Dieter, 89537 Giengen (DE); TRAUB, Alexander, 89542 Herbrechtingen (DE)
(86) Internationale Anmeldenummer: PCT/EP2014/070949
(87) Internationale Veröffentlichungsnummer: WO 2015/052045

(56) Entgegenhaltungen:
- WO-A1-00/48757
- DE-U- 1 921 517
- DE-U1- 7 923 201
- JP-A- H02 301 511
- JP-A- 2001 132 750

## Beschreibung

Die vorliegende Erfindung betrifft eine Zapfenaufnahme für eine Nabe zur Aufnahme des Zapfens eines Anschlussaggregats, insbesondere Walze, beispielweise Arbeitswalze, gemäß dem Oberbegriff von Anspruch 1.

In Walzwerken, wie sie die vorliegende Erfindung gemäß eines Anwendungsfalls betrifft, wird der Antrieb der Arbeitswalzen über eine Walzentriebverbindung hergestellt, bei welcher eine Gelenkwellen, insbesondere Schwergelenkwelle mit einem Rotationsdurchmesser von mehr als 550 mm, an einem axialen Ende eine Nabe mit einer Zapfenaufnahme aufweist, die auf den stirnseitigen Zapfen am Ende der angetriebenen Walze aufgeschoben wird. Eine solche Nabe wird auch als Treffernabe bezeichnet. In der Regel weist die Walze einen Flachzapfen auf, der in der Regel zwei aneinander gegenüberliegende abgeflachte Umfangsbereiche zur Drehmomentübertragung umfasst, die an entsprechend abgeflachten Bereichen einer Öffnung der Zapfenaufnahme angreifen, wobei die Zapfenaufnahme auch als Treffer und die Verbindung mit dem Walzenzapfen als Trefferverbindung bezeichnet werden.

Weil die Walzen regelmäßig nachgeschliffen werden müssen, wird zwischen der Arbeitswalze und der Gelenkwelle eine Anschlusstechnik benötigt, die ein schnelles Verbinden und Lösen ermöglicht. Die heute dominierenden Flachzapfenanschlüsse werden daher einfach durch Ineinanderschieben von Zapfen und Nabe hergestellt. Durch das hierfür benötigte Spiel, die hohen Belastungen sowie die Umgebungsbedingungen weisen derartige Verbindungen einen starken Verschleiß auf.

Zur Verschleißreduzierung werden herkömmlich Verschleißplatten zwischen der Treffernabe und den Flachzapfen vorgesehen, wobei jedoch auch Verbindungen ohne Verschleißplatten bekannt sind. Bei Verbindungen mit Verschleißplatten tritt der Verschleiß in der Regel an der Kontaktfläche der Verschleißplatten zum Flachzapfen (vorderen Oberfläche) auf. Um diesen Verschleiß zu reduzieren, wurde bereits vorgeschlagen, dass dort in der Regel vorhandene Spiel beim Einführen des Flachzapfens in die Öffnung der Zapfenaufnahme zu überbrücken, siehe hierzu beispielsweise DE 197 10 554 A1 und DE 197 10 552 A1. Die vorgeschlagenen konstruktiven Lösungen sind jedoch Sonderlösungen mit einem zusätzlichen konstruktiven Aufwand, der die Herstellung verteuert. Zudem gestaltet sich in der Praxis der Walzenwechsel schwieriger.

Aus der gattungsgemäßen DE 79 23 201 ist eine Vorrichtung eines Winkelstabes zum Kuppeln mit einer Mitnehmerwelle bekannt. Es ist eine Kupplungsausnehmung ausgebildet, die mit Verschleißkörpern versehen ist. Diese Verschleißkörper können ausgewechselt werden, um die Kontur der Kupplungsstelle zu ändern. In einer Ausführungsform ist vorgesehen, dass wenigstens eine der Verschleißplatten eine Ausnehmung aufweist, die von einem Dämpfungselement durchsetzt sind. Für die Dämpfungselemente ist als Material harter verschleißfester Kunststoff vorgesehen und die Verschleißplatten bestehen aus gehärtetem Stahl. Die Dämpfungselemente und die Verschleißplatten sind innerhalb einer Lagerstelle 6 angeordnet.
Aus der JP 02301511 ist die Herstellung von Stahlplatten mit einer gehäteten Oberfläche bekannt.
Aus der WO 00/48757 ist ein Lagerteil bekannt, dass auf beiden Seiten mit einer widerstandshöheren Schicht versehen ist.
Aus der DE 19 21 517 U ist eine Kupplung für Walzwerke bekannt. Für die Reduzierung des Verschleißes sind Gleitsteine vorgesehen. Der Flachzapfen der Walzen des Walzwerkes tritt mit einer ebenen Fläche der Gleitsteine in Kontakt.

Die Gleitsteine verfügen über eine gerundete Rückseite und sind in einer Lagerausnehmung schenkbar aufgenommen. Mittels einer Schwenkbewegung der Gleitsteine wird der flächige Kontakt zwischen dem Flachzapfen und dem Gleitstein hergestellt.

Aus der JP 2001 132750 A ist eine spezielle Metallplatte als Verschleißplatte mit Lochausnehmungen bekannt. In den Lochausnehmungen ist ein festes Schmiermittel vorgesehen. Auf der Gleitoberfläche der Platte sind Ölnuten ausgebildet.

Bei den bekannten Ausführungsformen ist besonders problematisch, dass sich auch an den Kontaktpunkten oder -linien zwischen der Verschleißplatte und der Treffernabe in der Zapfenaufnahme ein Verschleiß einstellt, der nach einer gewissen Laufzeit der Walzentriebverbindung zu Nachteilen im Betrieb des Walzwerks aufgrund eines zunehmenden Spiels in der Verbindung führt. Aus diesem Grund ist es erforderlich, die Verschleißplatten regelmäßig zu wechseln. Ferner ist eine aufwändige Nachbearbeitung der Zapfenaufnahme in der Nabe erforderlich, um den dort auftretenden Verschleiß auszubessern. Eine solche Nacharbeit in der Zapfenaufnahme kann in aller Regel auch nur einmal durchgeführt werden, was die Lebensdauer der Nabe mit der Zapfenaufnahme stark einschränkt und Ersatzbeschaffungen erfordert.

Der vorliegenden Erfindung liegt die Aufgabe zugrunde, eine Zapfenaufnahme für eine Nabe anzugeben, die eine kostengünstige Konstruktion, geringere Wartungskosten und eine verlängerte Lebensdauer im Vergleich zum Stand der Technik ermöglicht.

Die erfindungsgemäße Aufgabe wird durch eine Zapfenaufnahme mit den Merkmalen von Anspruch 1 gelöst. In den abhängigen Ansprüchen sind vorteilhafte und besonders zweckmäßige Ausgestaltungen der Erfindung angegeben, sowie eine Walzentriebverbindung mit einer erfindungsgemäßen Zapfenaufnahme.

Eine erfindungsgemäße Zapfenaufnahme für eine Nabe zur Aufnahme des Zapfens eines Anschlussaggregats weist einen Grundkörper mit einer zumindest teilweise mit wenigstens einer Verschleißplatte, insbesondere mit zwei Verschleißplatten, ausgekleideten Öffnung zur Einführung des Zapfens auf. Der Grundkörper kann auch als Naben-Grundkörper bezeichnet werden. Unter Anschlussaggregat ist jegliches Aggregat mit einem Zapfen zu verstehen, das in Triebverbindung mit der Nabe eingesetzt werden kann. Insbesondere ist vorliegend jedoch eine Walze als Anschlussaggregat vorgesehen, sodass der Walzenzapfen in die Aufnahme der Nabe, insbesondere einer Kreuzgelenkwelle, eingesetzt wird.

Die wenigstens eine Verschleißplatte, insbesondere beide Verschleißplatten, weist/weisen eine vordere Oberfläche zur Anlage an dem Zapfen auf, die die Öffnung für den Zapfen begrenzt. Die vordere Oberfläche kann beispielsweise an einem abgeflachten und insbesondere ebenen Umfangsbereich des Zapfens anliegen. Ferner ist an jeder Verschleißplatte eine hintere Oberfläche vorgesehen, die von der vorderen Oberfläche abgewandt ist, also entgegengesetzt zu dieser positioniert ist, und an einer Aufnahmeoberfläche des Nabe-Grundkörpers zumindest zeitweise oder permanent anliegt. Ein zeitweises Anliegen kann beispielsweise vorgesehen sein, wenn die entsprechende Verschleißplatte mit einem Spiel in den Grundkörper eingesetzt ist, das beim Einführen des Zapfen in die Aufnahmeöffnung in der Regel überbrückt wird.

Erfindungsgemäß weist nun die Verschleißplatte auf ihrer hinteren Oberfläche, das heißt somit auf der dem Grundkörper zugewandten und von der Öffnung abgewandten Oberfläche, eine geringere Härte auf als die entsprechend der hinteren Oberfläche zugeordnete Aufnahmeoberfläche des Naben-Grundkörpers.

Die Abkehr von der bisherigen Praxis, in welcher die Verschleißplatten besonders verschleißarm und damit hart ausgeführt sein sollten, bewirkt, dass ein nicht vermeidbarer Verschleiß in der Paarung der Aufnahmeoberfläche des Grundkörpers der Zapfenaufnahme der Nabe und der hinteren Oberfläche der Verschleißplatte nahezu ausschließlich oder ausschließlich in der Verschleißplatte auftritt, die jedoch austauschbar am Grundkörper der Nabe befestigt ist. Somit kann die bisher erforderliche Nachbearbeitung des Grundkörpers der Nabe entfallen und die Lebensdauer der Nabe wird wesentlich erhöht.

Besonders vorteilhaft weist die Verschleißplatte auf ihrer vorderen Oberfläche, also auf der Oberfläche, die an dem Zapfen, insbesondere einem abgeflachten oder ebenen Umfangsbereich des Zapfens bei einem Flachzapfen anliegt, eine größere Härte auf als die hintere Oberfläche und insbesondere auch als eine zwischen der vorderen Oberfläche und hinteren Oberfläche der Verschleißplatte vorgesehenen Zwischenschicht. Beispielsweise wird die vordere Oberfläche und die hintere Oberfläche jeweils durch eine Randschicht ausgebildet, wobei sich diese beiden Randschichten beidseitig unmittelbar an die Zwischenschicht anschließen.

Besonders günstig ist es, wenn die hintere Oberfläche der Verscheißplatte und die Aufnahmeoberfläche derart gestaltet sind, dass sich anstelle einer Linienberührung oder Punktberührung eine flächige Anlage mit Flächenberührung ergibt. Hierdurch können örtliche Druckbelastungen und damit der Verschleiß weiter reduziert werden.

Die Härte auf der hinteren Oberfläche der Verschleißplatte kann beispielsweise durch Vergüten und/oder gezieltes Anlassen reduziert werden. Bei einem solchen Anlassen wird die hintere Oberfläche der insbesondere aus Metall hergestellten Verschleißplatte isoliert erwärmt, um Werkstoffspannungen abzubauen. Wenn als Werkstoff für die Verschleißplatte Stahl verwendet wird, kann eine solche Wärmebehandlung vorteilhaft durch Erwärmen der hinteren Oberfläche der Verschleißplatte auf weniger als den sogenannten Umwandlungspunkt, beispielsweise bei 723° C, erfolgen.

Die Härte auf der vorderen Oberfläche der Verschleißplatte kann vorteilhaft durch Randschichthärten, Nitrieren oder Oberflächenverdichtung, beispielweise Kugelstrahlen oder Nageln, gegenüber dem verbleibenden Querschnitt der Verschleißplatte, insbesondere der genannten Zwischenschicht und der hinteren Oberfläche, erhöht werden. Auch kommt in Betracht, auf der vorderen Oberfläche eine Beschichtung zur Erhöhung der Härte vorzusehen, beispielsweise durch CVD, PVD oder Plasmabeschichtung und/oder das Vorsehen einer DLC-Beschichtung.

Die Härte auf der hinteren Oberfläche der Verschleißplatte kann beispielsweise wenigstens 5 % geringer sein als die Härte der Aufnahmeoberfläche des Grundkörpers. Es kommen auch noch geringere Härten, beispielsweise von weniger als 10 - 20 % oder mehr im Vergleich zur Härte der Aufnahmeoberfläche in Betracht.

Der Verschleiß des Grundkörpers kann weiter reduziert werden, indem auf der Aufnahmeoberfläche des Grundkörpers und/oder auf der hinteren Oberfläche der Verschleißplatte eine Gleitschicht oder Gleitbeschichtung vorgesehen ist, die beispielsweise durch Verchromen, Hartverchromen oder Gleitlack hergestellt ist. Auch eine nichtmetallische Beschichtung, insbesondere Keramik kommt in Betracht. Auch kommt die Verwendung von anderen Gleitmaterialien, insbesondere von Gleitpasten, an dieser Flächenpaarung in Betracht. Vorteilhaft ist die Oberflächengüte durch Feinbearbeitung wie Schleifen oder eine spezielle Oberflächentopologie erhöht. Entsprechendes gilt für die vordere Oberfläche der Verschleißplatte beziehungsweise die Flächenpaarung aus vorderer Oberfläche der Verschleißplatte und zugeordneter Oberfläche des Zapfens.

Zur Verbesserung der Gleiteigenschaften in den Kontaktflächen kann auf der Aufnahmeoberfläche des Grundkörpers und/oder auf der hinteren Oberfläche der Verschleißplatte und/oder auf der vorderen Oberfläche der Verschleißplatte ein Festschmierstoff, insbesondere Graphit, Molybdändisulfid, Aluminium, Kupfer, Blei und/oder PTFE in dem Werkstoff integriert sein. Auch ein Gleitlager kann an der Oberfläche vorgesehen sein, insbesondere mit Gleitlagescheibe, zum Beispiel aus PEEK oder Polyamid. Die Verschleißplatte kann in den Grundkörper eingepresst sein, um Relativbewegungen zu reduzieren.

Ein erfindungsgemäßer Walzenantrieb, insbesondere eines Walzwerks, weist eine angetriebene Walze auf, die an einem axialen Ende einen Zapfen, insbesondere Flachzapfen, zur Einleitung eines Antriebsmomentes umfasst. Ferner ist eine Gelenkwelle vorgesehen, die an einem axialen Ende eine Nabe mit einer erfindungsgemäßen Zapfenaufnahme aufweist. Der Zapfen ist in die Öffnung des die Zapfenaufnahme ausbildenden Grundkörpers derart eingeführt oder einführbar, dass er an der wenigstens einen Verschleißplatte, insbesondere an zwei entgegengesetzt positionierten Verschleißplatten, an deren vorderer Oberfläche anliegt.

Die Erfindung soll nachfolgend anhand eines Ausführungsbeispiels exemplarisch beschrieben werden.

Es zeigen:
- Figur 1: einen erfindungsgemäßen Walzenantrieb mit einer Walzentriebverbindung mit erfindungsgemäßer Zapfenaufnahme;
- Figur 2: die Zapfenaufnahme mit dem einzuführenden Zapfen der Walze in vergrößerter Darstellung.

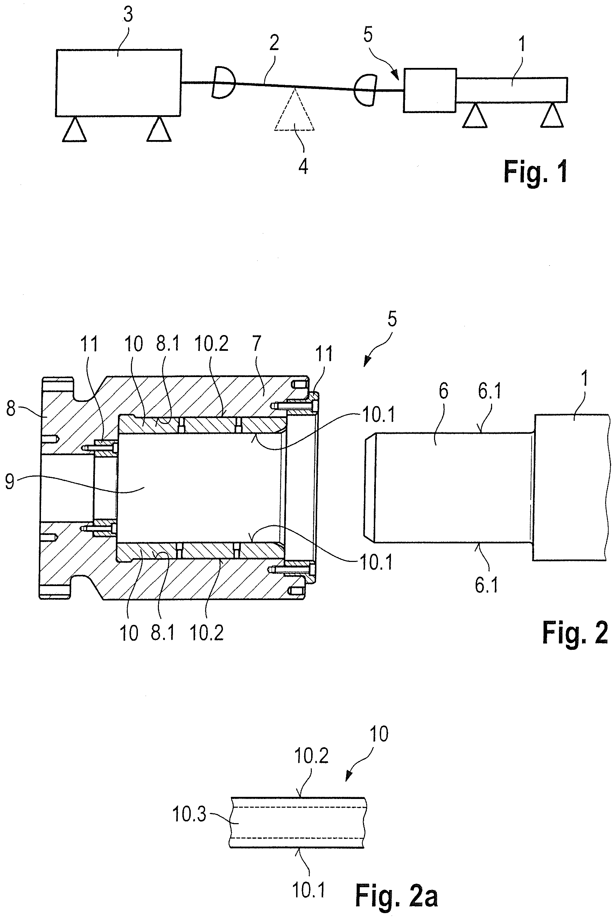

In der Figur 1 ist ein Walzwerk beziehungsweise Walzwerktriebstrang dargestellt, bei welchem eine Walze 1, auch Arbeitswalze genannt, über eine Gelenkwelle 2 mit zwei Gelenken mittels eines Motors 3, beispielsweise in Form eines Elektromotors, angetrieben wird. Die Gelenkwelle 2, die insbesondere als Kreuzgelenkwelle ausgeführt ist, ist mittels eines Lagers 4 gelagert und über eine erfindungsgemäße Walzentriebverbindung 5, die in der Figur 2 näher dargestellt ist, mit der Walze 1 verbunden.

In der Figur 2 erkennt man die Walzentriebverbindung 5, die durch den Zapfen 6 der Walze 1 und die Zapfenaufnahme 7 der Gelenkwelle (in der Figur 2 nicht dargestellt) beziehungsweise einer entsprechenden Nabe der Gelenkwelle gebildet wird. Die Zapfenaufnahme 7 weist einen Grundkörper 8 auf, in dem eine Öffnung 9 vorgesehen ist, in den der Zapfen 6 der Walze 1 eingeführt wird. In die Öffnung 9 sind zwei Verschleißplatten 10 einander gegenüberliegend eingesetzt, derart, dass sie die Öffnung 9 auf zwei Seiten des Umfangs des Zapfens 6 begrenzen. Diese beiden Seiten sind abgeflacht am Zapfen 6 ausgeführt und vorliegend mit 6.1 bezeichnet.

Im Grundkörper 7 sind ferner noch Zentrierstücke 11 vorgesehen, um den Zapfen 6 beim Einführen beziehungsweise beim Halten in der Öffnung 9 zu zentrieren. Vorliegend ist ein erstes Zentrierstück 11 am Einlass der Öffnung 9 vorgesehen und ein zweites Zentrierstück 11 am Boden der Öffnung 9.

Die Verschleißplatten 10 weisen jeweils eine vordere Oberfläche 10.1 und eine hintere Oberfläche 10.2 auf. Im eingeführten Zustand des Zapfens 6 in der Öffnung 9 liegen die vorderen Oberflächen 10.1 an den Oberflächen 6.1 des Zapfens 6 an und die hinteren Oberflächen 10.2 der Verschleißplatten 10 liegen immer oder zumindest im eingeführten Zustand des Zapfens 6 in der Öffnung 9 an Aufnahmeoberflächen 8.1 des Grundkörpers 8 an.

Erfindungsgemäß weisen nun die hinteren Oberflächen 10.2 der Verschleißplatten 10 eine geringere Härte auf als die Aufnahmeoberflächen 8.1 des Grundkörpers 8. Die vorderen Oberflächen 10.1 der Verschleißplatten 10 sind vorteilhaft mit einer größeren Härte als die hinteren Oberflächen 10.2 und insbesondere mit einer Zwischenschicht 10.3 in den Verschleißplatten 10 ausgeführt, die zwischen einer die hintere Oberfläche 10.2 ausbildenden und einer die vordere Oberfläche 10.1 ausbildenden Randschicht vorgesehen ist, siehe hierzu das Detail in der Figur 2a.

## Patentansprüche

1. Zapfenaufnahme (7) für eine Nabe zur Aufnahme des Zapfens (6) eines Anschlussaggregats, insbesondere einer Walze (1),
wobei die Zapfenaufnahme (7) einen Grundkörper (8), mit einer zumindest teilweise mit wenigstens einer Verschleißplatte (10) ausgekleideten Öffnung (9) zur Einführung des Zapfens (1) aufweist,
die Verschleißplatte (10) eine vordere Oberfläche (10.1) zur Anlage an dem Zapfen (6) aufweist, die die Öffnung für den Zapfen (6) begrenzt, und
die Verschleißplatte (10) eine hintere Oberfläche (10.2) aufweist, die von der vorderen Oberfläche (10.1) abgewandt ist und an einer Aufnahmefläche (8.1) des Grundkörpers (8) anliegt oder mit einem Spiel in den Grundkörper (8) eingesetzt ist; **dadurch gekennzeichnet, dass**
die Verschleißplatte (10) auf ihrer hinteren Oberfläche (10.2) eine geringere Härte aufweist als die Aufnahmeoberfläche (8.1) des Grundkörpers (8).

2. Zapfenaufnahme (7) gemäß Anspruch 1, **dadurch gekennzeichnet, dass** die Verschleißplatte (10) auf ihrer vorderen Oberfläche (10.1) eine größere Härte aufweist als auf ihrer hinteren Oberfläche (10.2).

3. Zapfenaufnahme (7) gemäß einem der Ansprüche 1 oder 2, **dadurch gekennzeichnet, dass** zwischen der vorderen Oberfläche (10.1) und der hinteren Oberfläche (10.2) der Verschleißplatte (10) eine Zwischenschicht (10.3) vorgesehen ist, die eine größere Härte als die hintere Oberfläche (10.2) und insbesondere eine geringere Härte als die vordere Oberfläche (10.1) aufweist.

4. Zapfenaufnahme (7) gemäß einem der Ansprüche 1 bis 3, **dadurch gekennzeichnet, dass** zwischen der hinteren Oberfläche (10.2) der Verschleißplatte (10) und der Aufnahmeoberfläche (8.1) eine flächige Anlage mit Flächenberührung vorgesehen ist.

5. Zapfenaufnahme (7) gemäß einem der Ansprüche 1 bis 4, **dadurch gekennzeichnet, dass** die Härte auf der hinteren Oberfläche (10.2) der Verschleißplatte (10) durch Vergüten und/oder Anlassen reduziert ist.

6. Zapfenaufnahme (7) gemäß einem der Ansprüche 2 bis 5, **dadurch gekennzeichnet, dass** die Härte auf der vorderen Oberfläche (10.1) der Verschleißplatte (10) durch Randschichthärten, Nitrieren, Oberflächenverdichtung und/oder Beschichtung gegenüber dem verbleibenden Querschnitt der Verschleißplatte (10) erhöht ist.

7. Zapfenaufnahme (7) gemäß einem der Ansprüche 1 bis 6, **dadurch gekennzeichnet, dass** auf der Aufnahmeoberfläche (8.1) des Grundkörpers (8) und/oder auf der hinteren Oberfläche (10.2) der Verschleißplatte (10) eine Gleitschicht oder Gleitbeschichtung vorgesehen ist.

8. Zapfenaufnahme (7) gemäß einem der Ansprüche 1 bis 7, **dadurch gekennzeichnet, dass** auf der vorderen Oberfläche (10.1) der Verschleißplatte (10) eine Gleitschicht oder Gleitbeschichtung vorgesehen ist.

9. Zapfenaufnahme (7) gemäß einem der Ansprüche 1 bis 8, **dadurch gekennzeichnet, dass** in den Werkstoff der Verschleißplatte (10) auf der hinteren Oberfläche (10.2) und/oder vorderen Oberfläche (10.1) ein Festschmierstoff, insbesondere Graphit, Molybdändisulfid, Aluminium, Kupfer, Blei und/oder PTFE integriert ist.

10. Walzentriebverbindung (5), insbesondere eines Walzwerks, mit einer angetriebenen Walze (1), die an einem axialen Ende einen Zapfen (6) zur Einleitung eines Antriebsmomentes aufweist;
mit einer Gelenkwelle (2), die an einem axialen Ende eine Nabe mit einer Zapfenaufnahme (7) gemäß einem der Ansprüche 1 bis 9 aufweist, wobei der Zapfen (6) in die Öffnung (9) des Grundkörpers (8) derart eingeführt oder einführbar ist, dass er an der wenigstens einen Verschleißplatte (10) an deren vorderen Oberfläche (10.1) anliegt.

## Claims

1. Journal receptacle (7) for a hub for receiving the journal (6) of an attachment unit, in particular of a roll (1), the journal receptacle (7) having a main body (8), with an opening (9) which is lined at least partially with at least one wear plate (10) for the introduction of the journal (1), the wear plate (10) having a front surface (10.1) for bearing against the journal (6), which front surface (10.1) delimits the opening for the journal (6), and the wear plate (10) having a rear surface (10.2) which faces away from the front surface (10.1) and bears against a receiving face (8.1) of the main body (8) or is inserted with play into the main body (8); **characterized in that** the wear plate (10) has a lower hardness on its rear surface (10.2) than the receiving surface (8.1) of the main body (8).

2. Journal receptacle (7) according to Claim 1, **characterized in that** the wear plate (10) has a greater hardness on its front surface (10.1) than on its rear surface (10.2).

3. Journal receptacle (7) according to either of Claims 1 and 2, **characterized in that** an intermediate layer (10.3) is provided between the front surface (10.1) and the rear surface (10.2) of the wear plate (10), which intermediate layer (10.3) has a greater hardness than the rear surface (10.2) and, in particular, has a lower hardness than the front surface (10.1) .

4. Journal receptacle (7) according to one of Claims 1 to 3, **characterized in that** a flat arrangement with full-surface contact is provided between the rear surface (10.2) of the wear plate (10) and the receiving surface (8.1).

5. Journal receptacle (7) according to one of Claims 1 to 4, **characterized in that** the hardness on the rear surface (10.2) of the wear plate (10) is reduced by way of tempering and/or annealing.

6. Journal receptacle (7) according to one of Claims 2 to 5, **characterized in that** the hardness on the front surface (10.1) of the wear plate (10) is increased in comparison with the remaining cross section of the wear plate (10) by way of case hardening, nitriding, surface compaction and/or coating.

7. Journal receptacle (7) according to one of Claims 1 to 6, **characterized in that** a sliding layer or sliding coating is provided on the receiving surface (8.1) of the main body (8) and/or on the rear surface (10.2) of the wear plate (10).

8. Journal receptacle (7) according to one of Claims 1 to 7, **characterized in that** a sliding layer or sliding coating is provided on the front surface (10.1) of the wear plate (10).

9. Journal receptacle (7) according to one of Claims 1 to 8, **characterized in that** a solid lubricant, in particular graphite, molybdenum disulfide, aluminium, copper, lead and/or PTFE, is integrated into the material of the wear plate (10) on the rear surface (10.2) and/or front surface (10.1).

10. Roll drive connection (5), in particular of a rolling mill, having a driven roll (1) which, at one axial end, has a journal (6) for the introduction of a drive torque; having an articulated shaft (2) which, at one axial end, has a hub with a journal receptacle (7) according to one of Claims 1 to 9, the journal (6) being introduced or being capable of being introduced into the opening (9) of the main body (8) in such a way that it bears against the at least one wear plate (10) at its front surface (10.1).

## Revendications

1. Logement de tourillon (7) pour un moyeu, destiné à recevoir le tourillon (6) d'un groupe de raccordement, en particulier d'un rouleau (1),
le logement de tourillon (7) présentant un corps de base (8) avec une ouverture (9) au moins en partie revêtue d'au moins une plaque d'usure (10) pour l'introduction du tourillon (1),
la plaque d'usure (10) présentant une surface avant (10.1) pour l'appui contre le tourillon (6) qui limite l'ouverture pour le tourillon (6), et la plaque d'usure (10) présentant une surface arrière (10.2) qui est opposée à la surface avant (10.1) et qui s'applique contre une surface de réception (8.1) du corps de base (8) ou qui est insérée dans le corps de base (8) avec jeu ; **caractérisé en ce que**
la plaque d'usure (10) présente sur sa surface arrière (10.2) une plus faible dureté que la surface de réception (8.1) du corps de base (8).

2. Logement de tourillon (7) selon la revendication 1, **caractérisé en ce que** la plaque d'usure (10) présente, sur sa surface avant (10.1), une plus grande dureté que sur sa surface arrière (10.2).

3. Logement de tourillon (7) selon l'une quelconque des revendications 1 ou 2, **caractérisé en ce qu'**entre la surface avant (10.1) et la surface arrière (10.2) de la plaque d'usure (10) est prévue une couche intermédiaire (10.3) qui présente une plus grande dureté que la surface arrière (10.2) et notamment une plus faible dureté que la surface avant (10.1).

4. Logement de tourillon (7) selon l'une quelconque des revendications 1 à 3, **caractérisé en ce qu'**entre la surface arrière (10.2) de la plaque d'usure (10) et la surface de réception (8.1) est prévu un appui plat avec contact superficiel.

5. Logement de tourillon (7) selon l'une quelconque des revendications 1 à 4, **caractérisé en ce que** la dureté sur la surface arrière (10.2) de la plaque d'usure (10) est réduite par amélioration par trempe et revenu et/ou recuit.

6. Logement de tourillon (7) selon l'une quelconque des revendications 2 à 5, **caractérisé en ce que** la dureté sur la surface avant (10.1) de la plaque d'usure (10) est accrue par rapport à la section transversale restante de la plaque d'usure (10) par trempe superficielle, nitruration, densification de surface et/ou revêtement.

7. Logement de tourillon (7) selon l'une quelconque des revendications 1 à 6, **caractérisé en ce que** sur la surface de réception (8.1) du corps de base (8) et/ou sur la surface arrière (10.2) de la plaque d'usure (10) est prévu(e) une couche de glissement ou un revêtement de glissement.

8. Logement de tourillon (7) selon l'une quelconque des revendications 1 à 7, **caractérisé en ce que** sur la surface avant (10.1) de la plaque d'usure (10) est prévu (e) une couche de glissement ou un revêtement de glissement.

9. Logement de tourillon (7) selon l'une quelconque des revendications 1 à 8, **caractérisé en ce que** dans le matériau de la plaque d'usure (10) sur la surface arrière (10.2) et/ou sur la surface avant (10.1) est intégré un lubrifiant solide, en particulier du graphite, du sulfure de molybdène, de l'aluminium, du cuivre, du plomb et/ou du PTFE.

10. Connexion d'entraînement de rouleaux (5), en particulier d'un laminoir, comprenant un rouleau entraîné (1) qui présente, au niveau d'une extrémité axiale, un tourillon (6) pour introduire un couple d'entraînement ;
comprenant un arbre d'articulation (2) qui présente, au niveau d'une extrémité axiale, un moyeu comprenant un logement de tourillon (7) selon l'une quelconque des revendications 1 à 9, le tourillon (6) étant introduit ou pouvant être introduit dans l'ouverture (9) du corps de base (8) de telle sorte qu'il s'applique contre l'au moins une plaque d'usure (10) au niveau de sa surface avant (10.1).
